# EUROPÄISCHE PATENTANMELDUNG

(11) **EP 3 699 436 A1**
(43) Veröffentlichungstag der Anmeldung: **26.08.2020**
(21) Anmeldenummer: 19158292.3
(22) Anmeldetag: 20.02.2019
(51) Int. Cl.: F04D 29/42, F04D 29/58, F04D 29/66

(54) **VERDICHTERGEHÄUSE EINES RADIALVERDICHTERS UND VERFAHREN ZUM ZUFÜHREN VON LADELUFT IN EINE BRENNKRAFTMASCHINE**

(71) Anmelder: ABB Schweiz AG, 5400 Baden (CH)
(72) Erfinder: Mathey, Christoph, 5442 Fislisbach (CH); Albiez, Bernd, 5400 Baden (CH)
(74) Vertreter: Zimmermann & Partner Patentanwälte mbB

(57) **Zusammenfassung**

Die Erfindung betrifft ein Verdichtergehäuse (10) eines Radialverdichters. Das Verdichtergehäuse (10) umfasst einen radial innen liegenden Gehäusebereich (10A), der einen axialen Einströmungskanal (11) in einem Ansaugbereich des Radialverdichters (20) bildet. Zusätzlich umfasst das Verdichtergehäuse (10) einen sich an den radial innen liegenden Gehäusebereich (10A) anschließenden Diffusorbereich (10B). Der Diffusorbereich (10B) ist ausgebildet, um eine radiale Strömung nach einem Verdichterrad (21) in eine axiale Richtung entgegen einer Einströmungsrichtung (12) des Einströmkanals (11) umzulenken. Ferner umfasst das Verdichtergehäuse (10) einen sich an den Diffusorbereich (10B) anschließenden radial außen liegenden Gehäusebereich (10C), der sich axial entgegengesetzt zur Einströmungsrichtung (12) erstreckt und einen oder mehrere Ladeluftsammelräume (13, 14) bereitstellt.

## Beschreibung

### TECHNISCHES GEBIET

Die Erfindung bezieht sich auf das Gebiet der Abgasturbolader für aufgeladene Brennkraftmaschinen. Insbesondere betrifft die Erfindung ein Verdichtergehäuse eines Radialverdichters. Ferner betrifft die Erfindung einen Radialverdichter mit einem solchen Verdichtergehäuse, einen Abgasturbolader mit einem solchen Radialverdichter und eine Brennkraftmaschine mit einem solchen Abgasturbolader. Darüber hinaus betrifft die Erfindung ein Verfahren zum Zuführen von Ladeluft in eine Brennkraftmaschine, insbesondere mittels des Verdichtergehäuses.

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Um den Ladedruck nach dem Verdichterrad weiter zu erhöhen, wird bei Radialverdichtern der Verdichteraustrittskanal des Verdichtergehäuses üblicherweise in Form einer Spirale mit am Umfang stetig zunehmender Querschnittsfläche ausgeführt, welche anschließend in einen Kegeldiffusor endet.

Es hat sich herausgestellt, dass bei den aus dem Stand der Technik bekannten spiralförmigen Verdichtergehäusen Strömungsverluste auftreten die zu Effizienzverlusten des Radialverdichters führen. Ferner, sind die konventionellen Verdichtergehäuse typischerweise so ausgeführt, dass eine etwaige Ladeluftkühlung separat, dem Verdichter nachgeschaltet und somit außerhalb des Verdichtergehäuses angeordnet ist.

### KURZE DARSTELLUNG DER ERFINDUNG

Die Aufgabe der vorliegenden Erfindung besteht darin, ein Verdichtergehäuse eines Radialverdichters bereitzustellen, das mindestens hinsichtlich einer der Nachteile der aus dem Stand der Technik bekannten spiralförmigen Verdichtergehäusen verbessert ist. Insbesondere besteht eine Aufgabe der vorliegenden Erfindung darin, ein Verdichtergehäuse bereitzustellen, mit welchem Strömungsverluste verringert werden, so dass Effizienzverluste des Radialverdichters minimiert werden können. Eine weitere Aufgabe der vorliegenden Erfindung besteht darin, ein Verdichtergehäuse bereitzustellen, das hinsichtlich der Integrierbarkeit einer Ladeluftkühlung verbessert ist. Darüber hinaus besteht eine weitere Aufgabe darin ein verbessertes Verfahren zum Zuführen einer Ladeluft in eine Brennkraftmaschine bereitzustellen.

Zur Lösung der obengenannten Aufgaben werden ein Verdichtergehäuse eines Radialverdichters sowie ein Verfahren zum Zuführen von Ladeluft in eine Brennkraftmaschine gemäß den unabhängigen Ansprüchen bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird ein Verdichtergehäuse eines Radialverdichters bereitgestellt. Das Verdichtergehäuse umfasst einen radial innen liegenden Gehäusebereich, der einen axialen Einströmungskanal in einem Ansaugbereich des Radialverdichters bildet. Zusätzlich umfasst das Verdichtergehäuse einen sich an den radial innen liegenden Gehäusebereich anschließenden Diffusorbereich. Der Diffusorbereich ist ausgebildet, um eine radiale Strömung nach einem Verdichterrad in eine axiale Richtung entgegen einer Einströmungsrichtung des Einströmkanals umzulenken. Ferner umfasst das Verdichtergehäuse einen sich an den Diffusorbereich anschließenden radial außen liegenden Gehäusebereich, der sich axial entgegengesetzt zur Einströmungsrichtung erstreckt und einen oder mehrere Ladeluftsammelräume bereitstellt.

Somit wird vorteilhafterweise ein Verdichtergehäuse eines Radialverdichters bereitgestellt, das gegenüber dem Stand der Technik verbessert ist. Insbesondere können durch das erfindungsgemäße Verdichtergehäuse vorteilhafterweise Strömungsverluste verringert werden, wodurch Effizienzverluste des Radialverdichters minimiert werden können. Darüber hinaus ermöglicht die Ausgestaltung des hierein beschriebenen Verdichtergehäuses eine Integration einer Ladluftkühlung. Dies ermöglicht die Realisierung eines kompakteren Aufladesystems, insbesondere mit weniger Luftanschlüssen, so dass das Aufladesystem kompakter und weniger komplex ausgeführt werden kann.

Gemäß einem weiteren Aspekt der Erfindung wird ein Radialverdichter mit einem Verdichtergehäuse gemäß hierin beschriebenen Ausführungsformen bereitgestellt.

Gemäß einem weiteren Aspekt der Erfindung wird ein Abgasturbolader bereitgestellt, der eine Turbine und einen Radialverdichter gemäß hierin beschriebenen Ausführungsformen umfasst.

Gemäß einem weiteren Aspekt der Erfindung wird eine Brennkraftmaschine mit einem Abgasturbolader gemäß hierin beschriebenen Ausführungsformen bereitgestellt. Insbesondere umfasst die Brennkraftmaschine einen Abgasturbolader gemäß hierin beschriebenen Ausführungsformen, der über eine oder mehrere Abgasleitungen und eine oder mehrere Ladeluftaustrittsöffnungen in vertikaler oder horizontaler Ausrichtung an einen Verbrennungsmotor angeschlossen ist.

Demnach kann durch die Verwendung des hierin beschriebenen Verdichtergehäuses in Zusammenhang mit einem Radialverdichter, einem Abgasturbolader mit dem Radialverdichter, und einer Brennkraftmaschine mit dem Abgasturbolader, ein verbesserter Radialverdichter, ein verbesserter Abgasturbolader als auch eine verbesserte Brennkraftmaschine bereitgestellt werden.

Gemäß einem weiteren Aspekt der Erfindung wird ein Verfahren zum Zuführen von Ladeluft in eine Brennkraftmaschine bereitgestellt. Das Verfahren umfasst ein Ansaugen von Luft durch einen axialen Einströmungskanal eines radial innen liegenden Gehäusebereichs eines Verdichtergehäuses zur Bereitstellung eines Luftstroms. Zusätzlich umfasst das Verfahren ein Umlenken und Expandieren des Luftstroms in einem Diffusorbereich des Verdichtergehäuses. Der Diffusorbereich ist ausgebildet, um eine radiale Strömung nach einem Verdichterrad in eine axiale Richtung entgegen einer Einströmungsrichtung des Einströmkanals umzulenken. Ferner umfasst das Verfahren ein Kühlen des Luftstroms in einem sich an den Diffusorbereich anschließenden radial außen liegenden Gehäusebereich, der sich axial entgegengesetzt zur Einströmungsrichtung erstreckt und einen oder mehrere Ladeluftsammelräume bereitstellt.

Somit wird vorteilhafterweise ein Ladeluftzuführungsverfahren bereitgestellt, mit welchem eine Ladluftkühlung innerhalb des Verdichtergehäuses durchgeführt werden kann.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Figur 1: eine schematische Schnittansicht eines Verdichtergehäuses gemäß hierin beschriebenen Ausführungsformen;
- Figur 2: eine schematische perspektivische Ansicht eines Verdichtergehäuses gemäß hierin beschriebenen Ausführungsformen;
- Figur 3: eine schematische perspektivische Ansicht eines Abgasturboladers gemäß hierin beschriebenen Ausführungsformen; und
- Figur 4: ein Flussdiagram zur Veranschaulichung eines Verfahrens zum Zuführen von Ladeluft in eine Brennkraftmaschine gemäß hierin beschriebenen Ausführungsformen.

### DETAILLIERTE BESCHREIBUNG DER FIGUREN

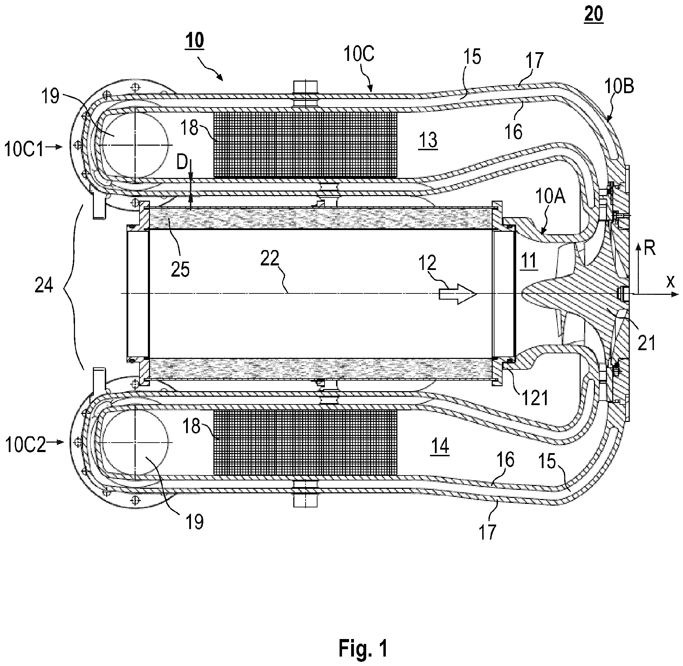

Mit Bezugnahme auf Figur 1 wird ein Verdichtergehäuse 10 eines Radialverdichters 20 gemäß der vorliegenden Offenbarung beschrieben. Gemäß einer Ausführungsform, die mit anderen hierin beschriebenen Ausführungsformen kombiniert werden kann, umfasst das Verdichtergehäuse 10 einen radial innen liegenden Gehäusebereich 10A, der einen axialen Einströmungskanal 11 in einem Ansaugbereich des Radialverdichters 20 bildet. Ferner umfasst das Verdichtergehäuse 10 einen sich an den radial innen liegenden Gehäusebereich 10A anschließenden Diffusorbereich 10B. Der Diffusorbereich 10B ist ausgebildet, um eine radiale Strömung nach einem Verdichterrad 21 in eine axiale Richtung entgegen einer Einströmungsrichtung 12 des Einströmkanals 11 umzulenken. Ferner umfasst das Verdichtergehäuse 10 einen sich an den Diffusorbereich 10B anschließenden radial außen liegenden Gehäusebereich 10C, der sich axial entgegengesetzt zur Einströmungsrichtung 12 erstreckt und einen oder mehrere Ladeluftsammelräume 13, 14 bereitstellt.

Somit wird vorteilhafterweise ein Verdichtergehäuse eines Radialverdichters bereitgestellt, das gegenüber aus dem Stand der Technik bekannten spiralförmigen Verdichtergehäusen verbessert ist. Insbesondere werden durch das Verdichtergehäuse gemäß den hierin beschriebenen Ausführungsformen vorteilhafterweise Strömungsverluste verringert. Dies wirkt sich positiv auf die Effizienz des Radialverdichters aus. Mit anderen Worten, das hierin beschriebenen Verdichtergehäuse hat den Vorteil, dass Effizienzverluste des Radialverdichters minimiert werden können. Ein weiterer Vorteil des hierin beschriebenen Verdichtergehäuses besteht darin, dass dessen Ausgestaltung für eine Integration einer Ladluftkühlung geeignet ist. Die Integration einer Ladluftkühlung in das Verdichtergehäuse ermöglicht die Realisierung eines kompakteren Aufladesystems, da eine separate, über Strömungskanäle mit dem Verdichtergehäuse verbundene Ladluftkühlung entfallen kann. Somit kann auch die Komplexität des Abgasturboladers reduziert werden.

Gemäß einer Ausführungsform, die mit anderen hierin beschriebenen Ausführungsformen kombiniert werden kann, ist zumindest einer des radial außen liegenden Gehäusebereichs 10C und des Diffusorbereichs 10B zweischalig ausgeführt, so dass ein für ein Kühlmedium durchströmbarer Zwischenraum 15 bereitgestellt wird, wie es beispielhaft in Figur 1 dargestellt ist. Insbesondere ist typischerweise der radial außen liegenden Gehäusebereichs 10C zweischalig ausgeführt. Der Diffusorbereich 10B kann teilweise zweischalig oder vollständig zweischalig ausgeführt sein. Figur 1 zeigt eine beispielhafte Ausführungsform, in welcher sowohl der radial außen liegenden Gehäusebereich 10C als auch der Diffusorbereich 10B zweischalig ausgeführt ist. Eine zweischalige Ausgestaltung des Diffusorbereichs 10B ist besonders vorteilhaft, um der Ladeluft möglichst viel Wärme zu entziehen.

Typischerweise ist der Zwischenraum 15 kontinuierlich ausgestaltet, so dass ein Kühlmedium (z.B. Wasser) im gesamten Zwischenraum 15 strömen kann, z.B. von einem axialen Ende des radial außen liegenden Gehäusebereichs 10C zu einem radial innen liegenden Ende des Diffusorbereichs 10B. Somit kann der einen oder die mehrere Ladeluftsammelräume 13, 14 zur Kühlung der Ladeluft von einem Kühlmediummantel umströmt werden. Ferner können im Zwischenraum 15 Leitbleche zu Strömungsleitung des Kühlmediums vorgesehen sein, so dass ein kontrollierter Kühlmediumstrom realisiert werden kann, um eine möglichst große Wärmemenge abzuführen. Dies kann den Wirkungsgrad des Gesamtsystems positiv beeinflussen.

Aufgrund der integrierten Kühlung des Verdichtergehäuses, kann das Verdichtergehäuse aus Aluminium oder einer Aluminiumlegierung ausgeführt werden, was vorteilhafterweise zu eine signifikanten Gewichtsreduktion führt. Demnach kann gemäß einer Ausführungsform, die mit anderen hierin beschriebenen Ausführungsformen kombiniert werden kann, das Material des Verdichtergehäuses Aluminium oder eine Aluminiumlegierung umfassen. Insbesondere kann das Verdichtergehäuse aus Aluminium oder aus einer Aluminiumlegierung bestehen.

Wie beispielhaft in Figur 1 dargestellt ist, kann zumindest einer, des radial außen liegenden Gehäusebereichs 10C und des Diffusorbereichs 10B, eine Innenschale 16 und eine Außenschale 17 umfassen. Typischerweise weist sowohl der radial außen liegenden Gehäusebereich 10C als auch der Diffusorbereich 10B eine Innenschale 16 und eine Außenschale 17 auf. Die Außenschale 17 ist in einem Abstand D zur Innenschale 16 angeordnet. Zur Stabilitätserhöhung können in dem Zwischenraum 15, insbesondere zwischen der Innenschale 16 und der Außenschale 17, Stützelemente (z.B. Streben) vorgesehen sein.

Gemäß einer Ausführungsform, die mit anderen hierin beschriebenen Ausführungsformen kombiniert werden kann, ist in dem einen oder den mehreren Ladeluftsammelräumen 13, 14 mindestens ein Ladeluftkühler 18 bereitgestellt, wie es beispielhaft in Figur 1 dargestellt ist.

In diesem Zusammenhang sei angemerkt, dass der mindestens eine Ladeluftkühler typischerweise so dimensioniert ist, dass die Ladeluft im Volllastpunkt auf das gewünschte Niveau heruntergekühlt werden kann.

Gemäß einer Ausführungsform, die mit anderen hierin beschriebenen Ausführungsformen kombiniert werden kann, weist der eine oder die mehreren Ladeluftsammelräume 13, 14 eine Innengeometrie auf, die an eine Außengeometrie des Ladluftkühlers angepasst ist. In diesem Zusammenhang ist zu verstehen, dass die Innengeometrie des einen oder der mehreren Ladeluftsammelräume zumindest in dem Bereich, in dem der mindestens ein Ladeluftkühler angeordnet ist, an die Außengeometrie des Ladluftkühlers angepasst ist.

Beispielsweise, kann die Außengeometrie des Ladluftkühlers quaderartig ausgebildet sein und die Innengeometrie des einen oder der mehreren Ladeluftsammelräume zumindest im Bereich des Ladluftkühlers an die quaderartige Außengeometrie des Ladluftkühlers angepasst sein. Prinzipiell sind auch andere geeignete Außengeometrien des Ladluftkühlers und damit andere entsprechend angepasste Innengeometrien des einen oder der mehreren Ladeluftsammelräume möglich.

Gemäß einer Ausführungsform, die mit anderen hierin beschriebenen Ausführungsformen kombiniert werden kann, umfasst der eine oder die mehreren Ladeluftsammelräume 13, 14 jeweils eine Ladeluftaustrittsöffnung 19, wie beispielhaft in Figur 1 dargestellt ist. Die Ladeluftaustrittsöffnung(en) ist/sind typischerweise derart ausgebildet, um eine Ausströmung der Ladeluft in eine Ausströmungsrichtung 23 bereitzustellen die quer, insbesondere im Wesentlichen rechtwinklig, zur Einströmungsrichtung 12 ist.

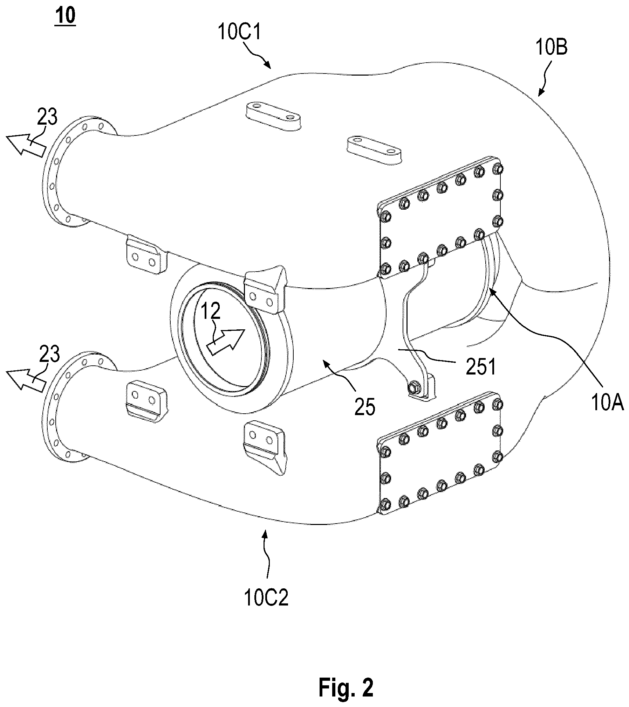

Gemäß einer Ausführungsform, die mit anderen hierin beschriebenen Ausführungsformen kombiniert werden kann, umfasst der radial außen liegenden Gehäusebereich 10C einen ersten Ladeluftsammelraum 13 und einen zweiten Ladeluftsammelraum 14. Der erste Ladeluftsammelraum 13 und der zweite Ladeluftsammelraum 14 sind jeweils mit dem Diffusorbereich 10B verbunden, sodass ein erster Ladeluftgehäuseschenkel 10C1 und ein zweiter Ladeluftgehäuseschenkel 10C2 bereitgestellt wird, wie es beispielhaft in den Figuren 1 und 2 dargestellt ist.

Typischerweise ist der radial außen liegenden Gehäusebereich 10C ausgehend vom Diffusorbereich 10B derart ausgestaltet dass der Ladeluftstrom stetig expandiert und sanft umgelenkt wird. Wie beispielhaft in Figur 1 dargestellt ist kann der Ladeluftstrom in einen oder mehrere Zweige (z.B. den ersten Ladeluftgehäuseschenkel 10C1 und den zweiten Ladeluftgehäuseschenkel 10C2) aufgeteilt und zu jeweils einem Ladeluftkühler 18 geleitet werden.

In den Figuren 1 und 2 ist eine beispielhafte Ausführungsform dargestellt, in welcher jeweils eine Ladeluftaustrittsöffnung 19 in dem ersten Ladeluftgehäuseschenkel 10C1 und dem zweiter Ladeluftgehäuseschenkel 10C2 angeordnet ist. Beispielsweise kann die Ladeluftaustrittsöffnung des ersten Ladeluftgehäuseschenkel 10C1 spiegelsymmetrisch zur Ladeluftaustrittsöffnung des zweiten Ladeluftgehäuseschenkels 10C2 angeordnet sein, wobei die in Figur 1 dargestellt Zentralachse die Symmetrieachse darstellt. Typischerweise entspricht die Zentralachse 22 der Rotationsachse des Verdichterrads 21.

Gemäß einer Ausführungsform, die mit anderen hierin beschriebenen Ausführungsformen kombiniert werden kann, weist der radial außen liegenden Gehäusebereich 10C eine axiale Ausdehnung in entgegengesetzter Richtung zur Einströmungsrichtung 12 auf, die größer ist als eine axiale Ausdehnung des radial innen liegenden Gehäusebereichs 10A, wie es beispielhaft in den Figuren 1 und 2 gezeigt ist. Somit ist das Verdichtergehäuse derart ausgebildet, dass der radial außen liegende Gehäusebereich 10C einen axialen Zwischenraum 24 zumindest teilweise umschließt.

Figuren 1 und 2 zeigen eine beispielhaft Ausführungsform, in welcher der axiale Zwischenraum 24 zwischen dem ersten Ladeluftgehäuseschenkel 10C1 und dem zweiten Ladeluftgehäuseschenkel 10C2 angeordnet ist. Typischerweise, ist der axiale Zwischenraum 24 ausgebildet, um ansaugseitig ein schallabsorbierendes Element 25 aufzunehmen, wie es beispielhaft in den Figuren 1 und 2 dargestellt ist. Wie beispielhaft in Figur 1 dargestellt ist, weist der radial innen liegende Gehäusebereich 10A ansaugseitig typischerweise eine Verbindungsstruktur 121 zur Befestigung eines schallabsorbierenden Elements 25 auf. Ferner kann das schallabsorbierende Element 25 über ein Befestigungselement 251 an dem radial außen liegenden Gehäusebereich 10C befestigt sein, wie es beispielhaft in Figur 2 dargestellt ist.

Mit anderen Worten, der axiale Zwischenraum 24 kann zur Luftzufuhr zum Einströmkanal 11 des Radialverdichters genutzt werden. Die Luftzufuhr kann über eine Zuleitung erfolgen, die als schallabsorbierende Struktur, beispielsweise als zylinderförmiges schallabsorbierendes Element 25, ausgebildet sein kann. Eine derartige schallabsorbierende Ansaugstrecke kann vorteilhafterweise genutzt werden, um an der Ansaugöffnung des Radialverdichters eine Reduktion des Schalldruckpegels zu erreichen. Damit kann ein Schalldämpfer mit geringerer Schallabsorption verwendet werden, der wiederum Vorteile im Druckverlust hat. Dies führt somit zu einer weiteren Verringerung der Verluste und somit zu einer Erhöhung des Systemwirkungsgrades.

Gemäß einem weiteren Aspekt der vorliegenden Offenbarung wird ein Radialverdichter 20 mit einem Verdichtergehäuse 10 gemäß hierin beschriebenen Ausführungsformen bereitgestellt. Wie beispielhaft in Figur 1 dargestellt ist, kann der Radialverdichter ein schallabsorbierendes Element 25 umfassen, welches ansaugseitig mit dem radial innen liegenden Gehäusebereich 10A verbunden ist und zumindest teilweise von dem radial außen liegenden Gehäusebereich 10C umschlossen ist.

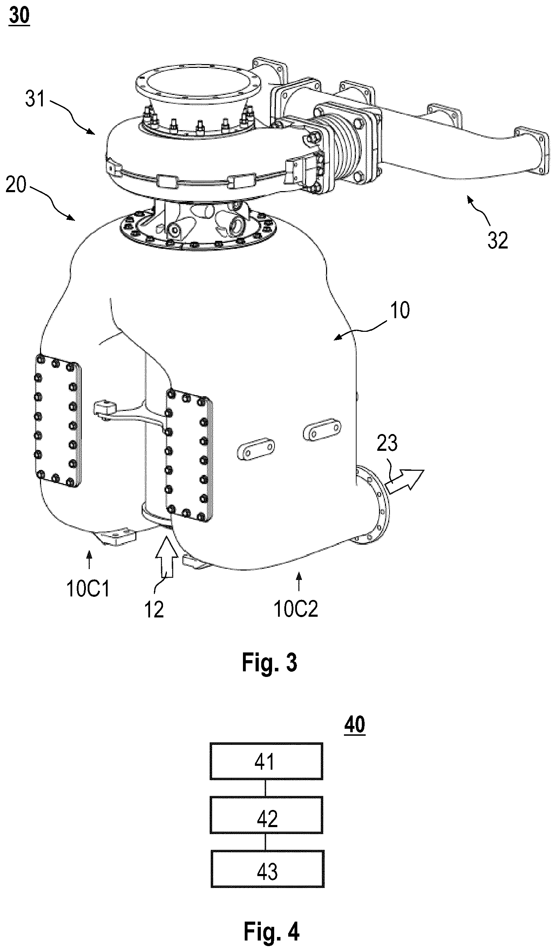

Figur 3 zeigt eine schematische perspektivische Ansicht eines Abgasturboladers 30 gemäß der vorliegenden Offenbarung. Der Abgasturbolader 30 umfasst eine Turbine 31 und einen Radialverdichter 20 gemäß hierin beschriebenen Ausführungsformen.

Gemäß einem weiteren Aspekt der vorliegenden Offenbarung wird eine Brennkraftmaschine mit einem Abgasturbolader gemäß hierein beschriebenen Ausführungsformen bereitgestellt. Insbesondere kann eine Brennkraftmaschine bereitgestellt werden, bei welcher der Abgasturbolader über eine oder mehrere Abgasleitungen 32 und eine oder mehrere Ladeluftaustrittsöffnungen 19 in vertikaler oder horizontaler Ausrichtung an einen Verbrennungsmotor angeschlossen ist. Dadurch kann eine möglichst direkte Verbindung zwischen Abgas-Austritt am Zylinderkopf als auch Lufteintritt des Verbrennungsmotors erreicht werden. Demnach ermöglicht die hierin beschriebene Ausgestaltung des Turboladers, umfassend einen Radialverdichter mit einem Verdichtergehäuse gemäß herein beschriebenen Ausführungsformen, einen sehr kompakten Anbau des Turboladers an den Verbrennungsmotor.

Mit Bezugnahme auf das in Figur 4 dargestellte Flussdiagramm wird ein Verfahren 40 zum Zuführen von Ladeluft in eine Brennkraftmaschine gemäß der vorliegenden Offenbarung beschrieben.

Gemäß einer Ausführungsform, die mit anderen hierin beschriebenen Ausführungsformen kombiniert werden kann, umfasst das Verfahren 40 ein Ansaugen von Luft (beispielshaft dargestellt durch Verfahrensblock 41 in Figur 4) durch einen axialen Einströmungskanal 11 eines radial innen liegenden Gehäusebereichs 10A eines Verdichtergehäuses zur Bereitstellung eines Luftstroms. Zusätzlich umfasst das Verfahren 40 ein Umlenken und Expandieren des Luftstroms (beispielshaft dargestellt durch Verfahrensblock 42 in Figur 4) in einem Diffusorbereich 10B des Verdichtergehäuses. Der Diffusorbereich 10B ist ausgebildet, um eine radiale Strömung nach einem Verdichterrad 21 in eine axiale Richtung entgegen einer Einströmungsrichtung 12 des Einströmkanals 11 umzulenken, wie es aus Figur 1 hervorgeht. Ferner umfasst das Verfahren ein Kühlen des Luftstroms (beispielshaft dargestellt durch Verfahrensblock 43 in Figur 4) in einem sich an den Diffusorbereich 10B anschließenden radial außen liegenden Gehäusebereich 10C. Der radial außen liegenden Gehäusebereich 10C erstreckt sich axial entgegengesetzt zur Einströmungsrichtung 12 und stellt einen oder mehrere Ladeluftsammelräume 13, 14 bereit.

Wie hierin beschrieben, kann zumindest einer, insbesondere beide, des radial außen liegenden Gehäusebereichs 10C und des Diffusorbereichs 10B, zweischalig ausgeführt sein, um einen Zwischenraum 15 zu bilden. Demnach kann das Kühlen des Luftstroms ein Durchströmen des Zwischenraums 15 mit Kühlmedium umfassen.

Darüber hinaus kann, wie hierin beschrieben, in dem einen oder den mehreren Ladeluftsammelräumen 13, 14 mindestens ein Ladeluftkühler 18 bereitgestellt sein. Demnach kann das Kühlen des Luftstroms, zusätzlich oder alternativ, das Kühlen des Luftstroms mittels des mindestens einen Ladeluftkühlers durchgeführt werden.

In diesem Zusammenhang sei angemerkt, dass das hierin beschriebene Verfahren zum Zuführen von Ladeluft in eine Brennkraftmaschine unter Verwendung des hierein beschriebenen Verdichtergehäuses, insbesondere unter Verwendung des hierin beschriebenen Radialverdichters, durchgeführt werden kann.

Wie aus den hierin beschriebenen Ausführungsformen hervorgeht werden vorteilhafterweise ein Verdichtergehäuse eines Radialverdichters, ein Radialverdichter, ein Abgasturbolader, eine Brennkraftmaschine als auch ein Verfahren zum Zuführen von Ladeluft in eine Brennkraftmaschine bereitgestellt, welche gegenüber dem Stand der Technik verbessert sind.

Insbesondere können durch das erfindungsgemäße Verdichtergehäuse vorteilhafterweise Strömungsverluste verringert werden, wodurch Effizienzverluste des Radialverdichters minimiert werden können. Darüber hinaus ermöglicht die Ausgestaltung des hierein beschriebenen Verdichtergehäuses eine Integration einer Ladluftkühlung. Dies ermöglicht die Realisierung eines kompakteren Aufladesystems, insbesondere mit weniger Luftanschlüssen, so dass das Aufladesystem kompakter und weniger komplex ausgeführt werden kann.

Mit anderen Worten, bei den hierein beschriebenen Ausführungsformen wird ein aus dem Stand der Technik bekanntes Spiralgehäuse eines Radialverdichters durch die hierein beschriebene Ausgestaltung des Verdichtergehäuses ersetzt. Die hierin beschriebenen Ausführungsformen des Verdichtergehäuses sind vorteilhafterweise derart konfiguriert, dass eine in das Verdichtergehäuse integrierte Ladluftkühlung bereitgestellt werden kann. Insbesondere ermöglicht das hierin beschriebene Verdichtergehäuse, dass die verdichtete Luft, ohne Zwischenschaltung einer Spirale, sowie ohne weitere Schnittstelle, direkt im Verdichtergehäuse (mit Diffusor-ähnlicher Ausbildung) gekühlt und zu einem Ladeluftkühler geleitet werden kann. Am Ausgang des Verdichtergehäuses kann die gekühlte Ladeluft einem Receiver eines Verbrennungsmotors übergeben werden.

### BEZUGZEICHENLISTE

- 10: Verdichtergehäuse
- 10A: radial innen liegender Gehäusebereich
- 10B: Diffusorbereich
- 10C: radial außen liegender Gehäusebereich
- 10C1: erster Ladeluftgehäuseschenkel
- 10C2: zweiter Ladeluftgehäuseschenkel
- 11: Einströmungskanal
- 12: Einströmungsrichtung
- 121: Verbindungsstruktur des radial innen liegenden Gehäusebereichs zur Befestigung eines schallabsorbierenden Elements
- 13: erster Ladeluftsammelraum
- 14: zweiter Ladeluftsammelraum
- 15: Zwischenraum
- 16: Innenschale
- 17: Außenschale
- 18: Ladeluftkühler
- 19: Ladeluftaustrittsöffnung
- 20: Radialverdichter
- 21: Verdichterrad
- 22: Zentralachse
- 23: Ausströmungsrichtung der Ladeluft
- 24: axialer Zwischenraum
- 25: schallabsorbierendes Element
- 251: Befestigungselement zur Befestigung des schallabsorbierenden Elements an dem radial außen liegender Gehäusebereich
- 30: Abgasturbolader
- 31: Turbine
- 32: Abgasleitung
- 40: Verfahren zum Zuführen von Ladeluft in eine Brennkraftmaschine
- 41: Verfahrensschrittblock repräsentierend "Ansaugen von Luft"
- 42: Verfahrensschrittblock repräsentierend "Umlenken und Expandieren des Luftstroms"
- 43: Verfahrensschrittblock repräsentierend "Kühlen des Luftstroms"
- R: radiale Richtung
- x: axiale Richtung
- D: Abstand zwischen Innenschale und Außenschale

## Patentansprüche

1. Verdichtergehäuse (10) eines Radialverdichters (20), umfassend:
- einen radial innen liegenden Gehäusebereich (10A), der einen axialen Einströmungskanal (11) in einem Ansaugbereich des Radialverdichters (20) bildet;
- einen sich an den radial innen liegenden Gehäusebereich (10A) anschließenden Diffusorbereich (10B), der ausgebildet ist um eine radiale Strömung nach einem Verdichterrad (21) in eine axiale Richtung entgegen einer Einströmungsrichtung (12) des Einströmkanals (11) umzulenken; und
- einen sich an den Diffusorbereich (10B) anschließenden radial außen liegenden Gehäusebereich (10C), der sich axial entgegengesetzt zur Einströmungsrichtung (12) erstreckt und einen oder mehrere Ladeluftsammelräume (13, 14) bereitstellt.

2. Verdichtergehäuse (10) gemäß Anspruch 1, wobei zumindest einer, insbesondere beide, des radial außen liegenden Gehäusebereichs (10C) und des Diffusorbereichs (10B), zweischalig ausgeführt ist/sind, um einen für ein Kühlmedium durchströmbaren Zwischenraum (15) zu bilden.

3. Verdichtergehäuse (10) gemäß Anspruch 1 oder 2, wobei zumindest einer, insbesondere beide, des radial außen liegenden Gehäusebereichs (10C) und des Diffusorbereichs (10B), eine Innenschale (16) und eine zur Innenschale mit einem Abstand D beabstandete Außenschale (17) umfasst.

4. Verdichtergehäuse (10) gemäß einem der Ansprüche 1 bis 3, wobei in dem einen oder den mehreren Ladeluftsammelräumen (13, 14) mindestens ein Ladeluftkühler (18) bereitgestellt ist.

5. Verdichtergehäuse (10) gemäß Anspruch 4, wobei der eine oder die mehreren Ladeluftsammelräume (13, 14) eine Innengeometrie aufweisen, die an eine Außengeometrie des Ladluftkühlers angepasst ist.

6. Verdichtergehäuse (10) gemäß einem der Ansprüche 1 bis 5, wobei der eine oder die mehreren Ladeluftsammelräume (13, 14) eine Ladeluftaustrittsöffnung (19) umfassen, die ausgebildet ist, um eine Ausströmung der Ladeluft in eine Ausströmungsrichtung (23) bereitzustellen die quer, insbesondere im Wesentlichen rechtwinklig, zur Einströmungsrichtung (12) ist.

7. Verdichtergehäuse (10) gemäß einem der Ansprüche 1 bis 6, wobei der radial außen liegenden Gehäusebereich (10C) einen ersten Ladeluftsammelraum (13) und einen zweiten Ladeluftsammelraum (14) umfasst, die jeweils mit dem Diffusorbereich (10B) verbunden sind, sodass ein erster Ladeluftgehäuseschenkel (10C1) und ein zweiter Ladeluftgehäuseschenkel (10C2) bereitgestellt wird.

8. Verdichtergehäuse (10) gemäß einem der Ansprüche 1 bis 7, wobei der radial außen liegenden Gehäusebereich (10C) eine axiale Ausdehnung in entgegengesetzter Richtung zur Einströmungsrichtung (12) aufweist, die größer ist als eine axiale Ausdehnung des radial innen liegenden Gehäusebereichs (10A), sodass der radial außen liegenden Gehäusebereich (10C) einen axialen Zwischenraum (24) zumindest teilweise umschließt, wobei der axiale Zwischenraum (24) ausgebildet ist, um ansaugseitig ein schallabsorbierendes Element (25) aufzunehmen.

9. Verdichtergehäuse (10) gemäß einem der Ansprüche 1 bis 8, wobei der radial innen liegende Gehäusebereich (10A) ansaugseitig eine Verbindungsstruktur (121) zur Befestigung eines schallabsorbierenden Elements (25) aufweist.

10. Radialverdichter (20), umfassend ein Verdichtergehäuse (10) gemäß einem der Ansprüche 1 bis 9.

11. Radialverdichter (20) gemäß Anspruch 10, ferner umfassend ein schallabsorbierendes Element (25), welches ansaugseitig mit dem radial innen liegenden Gehäusebereich (10A) verbunden ist und zumindest teilweise von dem radial außen liegenden Gehäusebereich (10C) umschlossen ist.

12. Abgasturbolader (30), umfassend eine Turbine (31) und einen Radialverdichter (20) gemäß Anspruch 10 oder 11.

13. Brennkraftmaschine mit einem Abgasturbolader (30) gemäß Anspruch 12, insbesondere wobei der Abgasturbolader über eine oder mehrere Abgasleitungen (32) und eine oder mehrere Ladeluftaustrittsöffnungen (19) in vertikaler oder horizontaler Ausrichtung an einen Verbrennungsmotor angeschlossen ist.

14. Verfahren zum Zuführen von Ladeluft in eine Brennkraftmaschine, umfassend:
- Ansaugen von Luft durch einen axialen Einströmungskanal eines radial innen liegenden Gehäusebereichs (10A) eines Verdichtergehäuses zur Bereitstellung eines Luftstroms,
- Umlenken und Expandieren des Luftstroms in einem Diffusorbereich (10B) des Verdichtergehäuses, wobei der Diffusorbereich (10B) ausgebildet ist, um eine radiale Strömung nach einem Verdichterrad (21) in eine axiale Richtung entgegen einer Einströmungsrichtung (12) des Einströmkanals (11) umzulenken; und
- Kühlen des Luftstroms in einem sich an den Diffusorbereich (10B) anschließenden radial außen liegenden Gehäusebereich (10C), der sich axial entgegengesetzt zur Einströmungsrichtung (12) erstreckt und einen oder mehrere Ladeluftsammelräume (13, 14) bereitstellt.

15. Verfahren gemäß Anspruch 14, wobei zumindest einer, insbesondere beide, des radial außen liegenden Gehäusebereichs (10C) und des Diffusorbereichs (10B), zweischalig ausgeführt ist/sind, um einen Zwischenraum (15) zu bilden, und wobei das Kühlen des Luftstroms ein Durchströmen des Zwischenraums (15) mit Kühlmedium umfasst, inbesondere wobei in dem einen oder den mehreren Ladeluftsammelräumen (13, 14) mindestens ein Ladeluftkühler (18) bereitgestellt ist, und insbesondere wobei das Kühlen des Luftstroms mittels des mindestens einen Ladeluftkühlers durchgeführt wird.
